# EUROPEAN PATENT APPLICATION

(11) **EP 4 815 056 A1**
(43) Date of publication of application: **30.09.2026**
(21) Application number: 26168767.7
(22) Date of filing: 27.03.2026
(51) Int. Cl.: H01M 4/38, H01M 4/134, H01M 4/36, H01M 4/62, H01M 10/0525

(54) **ANODE ACTIVE MATERIAL FOR LITHIUM SECONDARY BATTERY AND LITHIUM SECONDARY BATTERY INCLUDING THE SAME**

(30) Priority: 28.03.2025 KR 20250040586
(71) Applicant: SK On Co., Ltd., Seoul 03161 (KR)
(72) Inventor: LA, Yun Ji, Daejeon 34124 (KR); PARK, Gwi Ok, Daejeon 34124 (KR); KIM, Nak Won, Daejeon 34124 (KR); MOON, Joon Hyung, Daejeon 34124 (KR)
(74) Representative: Stolmár & Partner Patentanwälte PartG mbB

(57) **Abstract**

An anode active material according to the present disclosure includes silicon-based particles and a coating layer covering at least a portion of a surface of the silicon-based particles and including polypyrrole. A lithium secondary battery according to the present disclosure includes an anode including the above-described anode active material and a cathode disposed opposite the anode.

## Description

### [BACKGROUND OF THE INVENTION]

### 1. Field of the Invention

The present disclosure relates to an anode active material for a lithium secondary battery and a lithium secondary battery including the anode active material.

### 2. Description of the Related Art

Secondary batteries are batteries that can be repeatedly charged and discharged. With the development of information and communication and display industries, they have been widely applied as power sources for portable electronic communication devices, such as camcorders, mobile phones, and laptop PCs. In addition, battery packs including secondary batteries have been developed and applied as power sources for eco-friendly vehicles, such as electric vehicles and hybrid vehicles.

Examples of secondary batteries may include a lithium secondary battery, a nickel-cadmium battery, a nickel-hydrogen battery and the like. Among these, the lithium secondary battery has been actively developed and applied due to its high operating voltage, high energy density per unit weight, and advantages in charging speed and weight reduction.

Recently, as the application scope of lithium secondary batteries has expanded, development of lithium secondary batteries having higher capacity and output characteristics has been actively pursued. For example, high-capacity silicon-based active materials such as silicon oxide may be used together as anode active materials.

However, when silicon oxide is used as an anode active material, gas generation in an aqueous slurry may increase and cycle life characteristics of the lithium secondary battery may be degraded.

### [SUMMARY OF THE INVENTION]

According to an aspect of the present disclosure, an object of the present disclosure is to provide an anode active material for a lithium secondary battery having improved initial efficiency, capacity characteristics, and cycle life characteristics.

According to another aspect of the present disclosure, another object of the present disclosure is to provide a lithium secondary battery having improved initial efficiency, capacity characteristics, and cycle life characteristics.

An anode active material for a lithium secondary battery according to the present disclosure includes: silicon-based particles including silicon; and a coating layer covering at least a portion of a surface of the silicon-based particles and including polypyrrole; wherein a molar ratio of a pyrrole repeating unit of the polypyrrole to the silicon is 0.01 to 0.15.

In some embodiments, the molar ratio of the pyrrole repeating unit of the polypyrrole to the silicon may be 0.01 to 0.07.

In some embodiments, the coating layer including polypyrrole may have a thickness of 5 nm to 300 nm.

In some embodiments, the polypyrrole may have a weight-average molecular weight of 2,000 to 1,000,000.

In some embodiments, the coating layer may further include a conductive polymer selected from the group consisting of polyacetylene, polyaniline, polythiophene, and a mixture thereof.

In some embodiments, the content of carbon derived from the polypyrrole may be 0.5 % by weight to 15 % by weight based on the total weight of the anode active material.

In some embodiments, the content of nitrogen derived from the polypyrrole may be less than 5 % by weight based on the total weight of the anode active material.

In some embodiments, the silicon content on a surface of the anode active material, as determined by X-ray photoelectron spectroscopy (XPS) analysis, may be less than 10 atomic percent (at%).

In some embodiments, the anode active material may have a median particle diameter (D50) of 1 µm to 15 µm.

In some embodiments, the silicon-based particles may include an alloy of silicon and at least one metal selected from the group consisting of Al, Sn, Pb, Zn, Bi, In, Mg, Ga, Cd, and a mixture thereof.

A lithium secondary battery according to the present disclosure includes: an anode including the above-described anode active material for a lithium secondary battery; and a cathode disposed opposite the anode.

The polypyrrole on the surface of the anode active material according to embodiments of the present disclosure may improve the electrical conductivity of the anode active material and protect the silicon-based particles within the anode active material, thereby enhancing the structural stability of the secondary battery. Accordingly, the secondary battery may provide enhanced initial capacity and efficiency, and cycle life characteristics thereof may be improved.

The anode active material for a lithium secondary battery according to the present disclosure and the lithium secondary battery including the same may be widely applied in green technology fields, including electric vehicles, battery charging stations, and green technology fields including renewable energy systems using batteries, such as solar power generation and wind power generation. The anode active material for a lithium secondary battery according to the present disclosure and the lithium secondary battery including the same may be used in eco-friendly electric vehicles and hybrid vehicles to suppress emissions of air pollutants and greenhouse gases, thereby contributing to mitigation of climate change.

### [BRIEF DESCRIPTION OF THE DRAWINGS]

The above and other objects, features and advantages of the present disclosure will be more clearly understood from the following detailed description taken in conjunction with the accompanying drawings, in which:
FIG. 1 is a cross-sectional view illustrating the structure of an anode active material according to exemplary embodiments; and
FIGS. 2 and 3 are a schematic plan view and a schematic cross-sectional view, respectively, illustrating a lithium secondary battery according to exemplary embodiments.

### [DETAILED DESCRIPTION OF THE INVENTION]

Examples of the present disclosure provide an anode active material 10 for a lithium secondary battery (hereinafter, also abbreviated as "anode active material") that includes silicon-based particles 20 including silicon and a coating layer 30 covering at least a portion of a surface of the silicon-based particles and including polypyrrole. In addition, a lithium secondary battery (hereinafter, also abbreviated as "secondary battery") including the anode active material 10 for a lithium secondary battery is provided.

Hereinafter, exemplary embodiments of the present disclosure will be described in detail. However, these embodiments are merely illustrative, and the present disclosure is not limited to the specific embodiments described as examples.

When a portion is described to "include" a component throughout the specification, unless otherwise specified, it means that the portion does not exclude other components and may further include other components. In addition, the singular forms may include plural forms, unless the context clearly indicates otherwise.

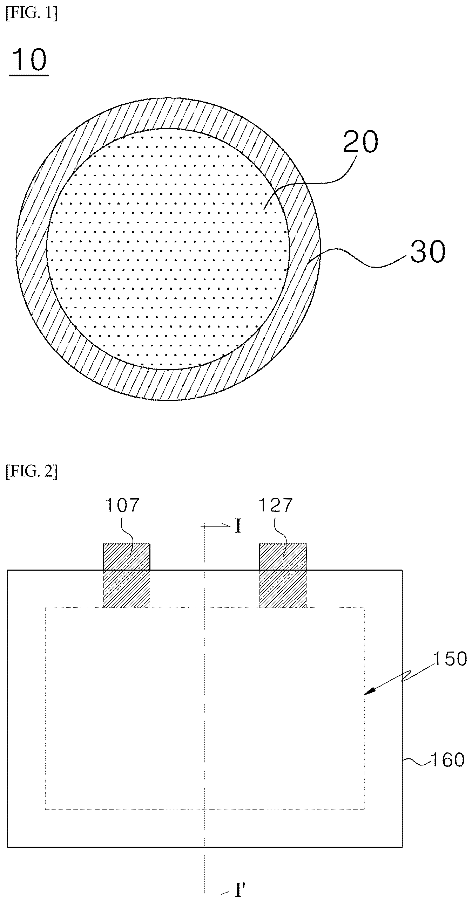

FIG. 1 is a cross-sectional view illustrating the structure of the anode active material 10 according to exemplary embodiments. Referring to FIG. 1, the anode active material 10 of the present disclosure includes silicon-based particles 20 including silicon, and the coating layer 30 covering at least a portion of the surface of the silicon-based particles 20 and including polypyrrole.

In exemplary embodiments, the anode active material 10 for a lithium secondary battery includes the silicon-based particles 20 including silicon.

In exemplary embodiments, the silicon-based particles 20 may include silicon in an amount of 40 % by weight ("wt%") or more, 50 wt% or more, 60 wt% or more, 70 wt% or more, 80 wt% or more, 90 wt% or more, or 95 wt% or more based on the total weight of the silicon-based particles 20. Within this range, the capacity characteristics of the lithium secondary battery may be improved.

In some embodiments, the silicon-based particles 20 may be pure silicon.

In some embodiments, the silicon-based particles 20 may include an alloy of silicon and at least one metal selected from the group consisting of Al, Sn, Pb, Zn, Bi, In, Mg, Ga, Cd, and a mixture thereof. For example, a secondary battery including the silicon alloy may have a thinner electrode thickness per unit area compared with graphite, thereby reducing DC-IR resistance and improving output characteristics during fast charging. In some embodiments, the silicon-based particles 20 may include silicon oxide, a silicon-carbon (Si-C) composite, a silicon (Si) alloy-based carbon composite, or a mixture thereof. For example, the silicon oxide may include SiOₘ (0<m<2).

In exemplary embodiments, the anode active material 10 for a lithium secondary battery may include the coating layer 30 covering at least a portion of the surface of the silicon-based particles 20 and including polypyrrole. By including the coating layer 30 including polypyrrole, the electrical conductivity of the silicon-based particles 20 may be enhanced, thereby improving initial efficiency. In addition, side reactions between silicon and water may be suppressed, thereby improving cycle life characteristics.

In exemplary embodiments, the coating layer may further include at least one conductive polymer selected from the group consisting of polyacetylene, polyaniline, polythiophene, and a mixture thereof.

In exemplary embodiments, a molar ratio of a pyrrole repeating unit of the polypyrrole to the silicon may be 0.01 to 0.15, and in some embodiments, 0.01 to 0.07, or 0.01 to 0.06.

Within the above range, the electrical conductivity of the anode active material 10 may be improved by including polypyrrole, which is an electrically conductive material. In addition, the coating layer 30 may protect the surface of the anode active material, thereby reducing reactivity with the electrolyte and improving the cycle life of the secondary battery.

For example, if the molar ratio of the pyrrole repeating unit of the polypyrrole to the silicon exceeds 0.15, the coating layer 30 including polypyrrole may become thick, thereby impeding migration of lithium ions and causing overvoltage and cycle life degradation.

For example, if the molar ratio of the pyrrole repeating unit of the polypyrrole to the silicon is less than 0.01, the coating layer 30 including polypyrrole may not sufficiently protect the silicon-based particles 20, such that the silicon-based particles 20 may excessively expand in volume during charging, and particle fracture or pulverization may occur concurrently with lithium deintercalation during discharging.

In exemplary embodiments, the coating layer 30 including polypyrrole may have a thickness of 5 nm to 300 nm, and in some embodiments, 5 nm to 150 nm, or 5 nm to 100 nm.

Within the above range, even if the silicon-based particles expand during charging and discharging, excessive volume expansion may be inhibited, thereby suppressing the occurrence of cracks in the silicon-based particles.

In exemplary embodiments, the polypyrrole may have a weight-average molecular weight of 2,000 to 1,000,000, and in some embodiments, 2,200 to 800,000, or 2,500 to 650,000.

Within the above range, the polypyrrole may uniformly coat the surface of the silicon-based particles 20.

In exemplary embodiments, the content of carbon derived from the polypyrrole may be 0.5 wt% to 15 wt%, and in some embodiments, 1 wt% to 12 wt%, or 3 wt% to 10 wt% based on the total weight of the anode active material 10.

Within the above range, the coating layer including polypyrrole may be uniformly formed on the silicon-based particles, thereby reducing side reactions by minimizing exposure of the active material surface to the electrolyte. Accordingly, the structural stability of the secondary battery may be improved.

In exemplary embodiments, the content of nitrogen derived from the polypyrrole may be less than 5 wt%, and in some embodiments, less than 4 wt%, or less than 3 wt% based on the total weight of the anode active material 10.

Within the above range, the coating layer including polypyrrole may be uniformly formed on the silicon-based particles, and the nitrogen content on the surface of the active material may increase, thereby improving the electrical conductivity of the anode active material.

In exemplary embodiments, the silicon content on the surface of the anode active material 10, as determined by X-ray photoelectron spectroscopy (XPS) analysis, may be less than 10 at%, and in some embodiments, less than 5 at%, or less than 4 at%.

Silicon exposed on the surface of the anode active material 10 without being coated with polypyrrole may be detected by the XPS analysis. Within the above range, the surface of the silicon-based particles 20 may be uniformly coated by polypyrrole, thereby improving the electrical conductivity of the anode active material 10.

In exemplary embodiments, the anode active material may have a median particle diameter (D50) of 1 µm to 15 µm, and in some embodiments, 2 µm to 10 µm, or 5 µm to 10 µm. Within this range, the coating layer 30 including polypyrrole may sufficiently cover the surface of the anode active material 10, thereby improving the electrical conductivity and suppressing excessive expansion of the silicon-based particles 20 during charging and discharging.

For example, the median particle diameter (D50) may be measured using a laser diffraction method. Specifically, the median particle diameter (D50) may be calculated by dispersing the target particles in a dispersion medium, introducing the dispersion into a commercially available laser diffraction particle size measuring device (e.g., Microtrac MT 3000), irradiating the dispersion with ultrasonic waves of about 28 kHz at an output power of 60 W, and then calculating the median particle diameter (D50) based on the 50% cumulative particle volume-based distribution according to particle size measured by the device.

Hereinafter, a method for preparing the above-described anode active material 10 according to exemplary embodiments will be described in more detail.

First, the silicon-based particles and pyrrole may be mixed. The mixing may be performed at a molar ratio within the above-described range.

For example, the silicon-based particles and pyrrole may be mixed in a solvent. The solvent is not particularly limited as long as pyrrole can be polymerized therein, and may be, for example, water (H₂O).

Next, an oxidant may be added to polymerize pyrrole, and the polymerization reaction may be carried out.

In some embodiments, the oxidant may include at least one selected from the group consisting of FeCl₃, K₂S₂O₈, and ((NH₄)₂S₂O₈).

The polymerization reaction may be carried out while stirring the mixture at room temperature (20 °C to 30 °C) for 12 to 36 hours after the oxidant is added. After the polymerization is completed, the anode active material 10 may be prepared by vacuum drying at 70 °C to 140 °C.

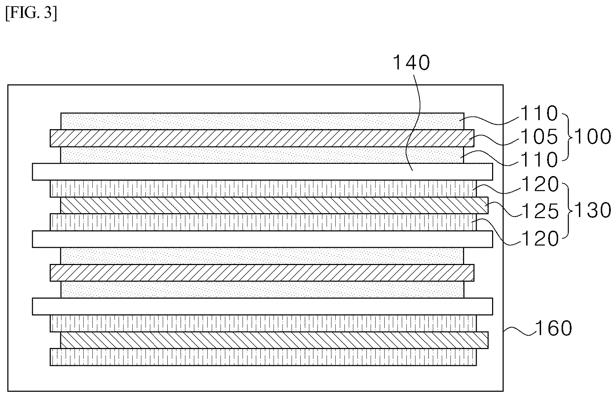

FIGS. 2 and 3 are a schematic plan view and a schematic cross-sectional view, respectively, illustrating a lithium secondary battery according to exemplary embodiments. For example, FIG. 3 is a cross-sectional view taken along line I-I' of FIG. 2 in a thickness direction of the lithium secondary battery.

The lithium secondary battery may include an anode 130 including the above-described anode active material 10 and a cathode 100 disposed opposite the anode 130.

The cathode 100 may include a cathode current collector 105 and a cathode active material layer 110 formed on at least one surface of the cathode current collector 105.

The cathode current collector 105 may include stainless steel, nickel, aluminum, titanium, or an alloy thereof. The cathode current collector 105 may also include aluminum or stainless steel having a surface treated with carbon, nickel, titanium or silver. For example, the cathode current collector 105 may have a thickness of 10 µm to 50 µm.

The cathode active material layer 110 may include a cathode active material. The cathode active material may include a compound capable of reversibly intercalating and deintercalating lithium ions.

According to exemplary embodiments, the cathode active material may include a lithium-nickel metal oxide. The lithium-nickel metal oxide may further include at least one of cobalt (Co), manganese (Mn) and aluminum (Al).

In some embodiments, the cathode active material or the lithium-nickel metal oxide may include a layered structure or a crystal structure represented by Formula 1 below.

[Formula 1] LiₓNiₐM_{b}O_{2+z}

In Formula 1, x, a, b and z may satisfy 0.9≤x≤1.2, 0.6≤a≤0.99, 0.01≤b≤0.4, and -0.5≤z≤0.1. As described above, M may include Co, Mn and/or Al.

The chemical structure represented by Formula 1 indicates a bonding relationship among elements included in the layered structure or the crystal structure of the cathode active material, and does not exclude the presence of additional elements. For example, M includes Co and/or Mn, and Co and/or Mn may be provided as main active elements of the cathode active material together with Ni. Here, it should be understood that Formula 1 is provided to express the bonding relationship between the main active elements, and is a formula encompassing the introduction and substitution of additional elements.

In one embodiment, the cathode active material may further include auxiliary elements which are added to the main active elements, in order to enhance chemical stability thereof or the layered structure/crystal structure. The auxiliary element may be incorporated into the layered structure/crystal structure together with the main active elements to form bonds, and it should be understood that this case is also included within the chemical structure range represented by Formula 1.

The auxiliary element may include, for example, at least one selected from the group consisting of Na, Mg, Ca, Y, Ti, Hf, V, Nb, Ta, Cr, Mo, W, Fe, Cu, Ag, Zn, B, Al, Ga, C, Si, Sn, Sr, Ba, Ra, P and Zr. The auxiliary element may also act, for example, as an auxiliary active element that contributes to the capacity/output activity of the cathode active material together with Co or Mn, such as Al.

For example, the cathode active material or the lithium-nickel metal oxide may include a layered structure or a crystal structure represented by Formula 1-1 below.

[Formula 1-1] LiₓNiₐM1_{b1}M2_{b2}O_{2+z}

In Formula 1-1, M1 may include Co, Mn and/or Al. M2 may include the above-described auxiliary elements. In Formula 1-1, x, a, bl, b2 and z may satisfy 0.9≤x≤1.2, 0.6≤a≤0.99, 0.01≤b1+b2≤0.4, and -0.5≤z≤0.1.

The cathode active material may further include a coating element or a doping element. For example, elements which are substantially the same as or similar to the above-described auxiliary elements may be used as the coating element or the doping element. For example, the above-described elements may be used alone or in combination of two or more thereof as the coating element or the doping element.

The coating element or the doping element may be present on the surface of the lithium-nickel metal oxide particles, or may penetrate through the surface of lithium-nickel metal oxide particles to be incorporated into the bonding structure represented by Formula 1 or Formula 1-1 above.

The cathode active material may include a nickel-cobalt-manganese (NCM)-based lithium oxide. In this case, an NCM-based lithium oxide with an increased content of nickel may be used.

Nickel may serve as a transition metal associated with the output and capacity of the lithium secondary battery. Therefore, as described above, by employing a high-nickel-content (high-Ni) composition in the cathode active material, a high-capacity cathode and a high-capacity lithium secondary battery may be provided.

However, as the Ni content increases, the long-term storage stability and cycle life stability of the cathode or the secondary battery may be relatively reduced, and side reactions with the electrolyte may also increase. Nevertheless, according to exemplary embodiments, by including Co while maintaining electrical conductivity, and Mn to improve cycle stability and capacity retention, both properties can be enhanced.

The content of Ni (e.g., a mole fraction of nickel based on the total molar amount of nickel, cobalt and manganese) in the NCM-based lithium oxide may be 0.5 or more, 0.6 or more, 0.7 or more, or 0.8 or more. In some embodiments, the content of Ni may be 0.8 to 0.95, 0.82 to 0.95, 0.83 to 0.95, 0.84 to 0.95, 0.85 to 0.95, or 0.88 to 0.95.

In some embodiments, the cathode active material may include a lithium cobalt oxide-based active material, a lithium manganese oxide-based active material, a lithium nickel oxide-based active material, or a lithium iron phosphate (LFP)-based active material (e.g., LiFePO₄).

In some embodiments, the cathode active material may include, for example, an Li-rich layered oxide (LLO)/over-lithiated oxide (OLO)-based active material, an Mn-rich-based active material, or a Co-less active material, each having a chemical structure or a crystal structure represented by Formula 2. These may be used alone or in combination of two or more thereof.

[Formula 2] p[Li₂MnO₃]·(1-p)[Li_{q}JO₂]

In Formula 2, p and q may satisfy 0<p<1, and 0.9≤q≤1.2, and J may include at least one element selected from the group consisting of Mn, Ni, Co, Fe, Cr, V, Cu, Zn, Ti, Al, Mg and B.

The cathode active material may be mixed in a solvent to prepare a cathode slurry. The cathode slurry may be coated onto at least one surface of the cathode current collector 105, then dried and roll-pressed to prepare the cathode active material layer 110. The coating may include processes such as gravure coating, slot die coating, simultaneous multilayer die coating, imprinting, doctor blade coating, dip coating, bar coating or casting, or the like. The cathode active material layer 110 may further include a binder, and optionally may further include a conductive material, a thickener or the like.

As the solvent, N-methyl-2-pyrrolidone (NMP), dimethylformamide, dimethylacetamide, N,N-dimethylaminopropylamine, ethylene oxide, tetrahydrofuran, and the like may be used.

The binder may include polyvinylidene fluoride (PVDF), poly(vinylidene fluoride-co-hexafluoropropylene), polyacrylonitrile, polymethylmethacrylate, acrylonitrile butadiene rubber (NBR), polybutadiene rubber (BR), styrene-butadiene rubber (SBR) and the like. These may be used alone or in combination of two or more thereof.

In one embodiment, a PVDF-based binder may be used as the cathode binder. In this case, the amount of binder for forming the cathode active material layer 110 may be decreased and the amount of the cathode active material may be relatively increased. Accordingly, the output characteristics and capacity characteristics of the secondary battery may be improved.

The conductive material may be added to the cathode active material layer 110 in order to enhance the conductivity thereof and/or the mobility of lithium ions or electrons. For example, the conductive material may include carbon-based conductive materials such as graphite, carbon black, acetylene black, Ketjen black, graphene, carbon nanotubes (CNTs), vapor-grown carbon fibers (VGCF), or carbon fibers; and/or metal-based conductive materials such as tin, tin oxide, and titanium oxide; as well as perovskite materials such as LaSrCoO₃, and LaSrMnO₃. These may be used alone or in combination of two or more thereof.

The cathode slurry may further include a thickener and/or a dispersant. In one embodiment, the cathode slurry may include a thickener such as carboxymethyl cellulose (CMC).

The anode 130 may include an anode current collector 125, and an anode active material layer 120 formed on at least one surface of the anode current collector 125.

For example, the anode current collector 125 may include copper foil, nickel foil, stainless steel foil, titanium foil, nickel foam, copper foam, or a polymer substrate coated with a conductive metal. These may be used alone or in combination of two or more thereof. For example, the anode current collector 125 may have a thickness of 10 µm to 50 µm.

The anode active material layer 120 may include the anode active material 10 including the above-described coating layer.

The anode active material 10 may be mixed in a solvent to prepare an anode slurry. The anode slurry may be coated or deposited on the anode current collector 125, and then dried and roll-pressed to prepare the anode active material layer 120. The coating may include processes such as gravure coating, slot die coating, simultaneous multilayer die coating, imprinting, doctor blade coating, dip coating, bar coating or casting, or the like. The anode active material layer 120 may further include a binder, and optionally may further include a conductive material, a thickener or the like.

In exemplary embodiments, the anode may further include a carbon-based active material.

For example, natural graphite and/or artificial graphite may be used as the carbon-based active material.

The solvent contained in the anode slurry may include water, purified water, deionized water, distilled water, ethanol, isopropanol, methanol, acetone, n-propanol, t-butanol and the like. These may be used alone or in combination of two or more thereof.

The above-described materials that can be used when preparing the cathode 100 as the binder, conductive material and thickener may also be used for the anode.

In some embodiments, a styrene-butadiene rubber (SBR)-based binder, carboxymethyl cellulose (CMC), polyacrylic acid-based binder, poly(3,4-ethylenedioxythiophene) (PEDOT)-based binder, and the like may be used as an anode binder. These may be used alone or in combination of two or more thereof.

In exemplary embodiments, a separator 140 may be interposed between the cathode 100 and the anode 130. The separator 140 may be configured to prevent an electrical short-circuit between the cathode 100 and the anode 130, and to allow the flow of ions. For example, the separator may have a thickness of 10 µm to 20 µm.

For example, the separator 140 may include a porous polymer film or a porous nonwoven fabric.

The porous polymer film may include a polyolefin-based polymer such as an ethylene polymer, a propylene polymer, an ethylene/butene copolymer, an ethylene/hexene copolymer, or an ethylene/methacrylate copolymer, etc. These may be used alone or in combination of two or more thereof.

The porous nonwoven fabric may include glass fibers having a high melting point, polyethylene terephthalate fibers, etc.

The separator 140 may also include a ceramic-based material. For example, inorganic particles may be coated on the polymer film or dispersed within the polymer film to improve heat resistance.

The separator 140 may have a single-layer or multilayer structure including the above-described polymer film and/or non-woven fabric.

According to exemplary embodiments, an electrode cell may be defined by the cathode 100, the anode 130 and the separator 140, and a plurality of electrode cells may be stacked to form, for example, a jelly roll type electrode assembly 150. For example, the electrode assembly 150 may be formed by winding, stacking, z-folding, or stack-folding the separator 140.

The electrode assembly 150 may be accommodated in a case 160 together with the electrolyte to define a lithium secondary battery. According to exemplary embodiments, a non-aqueous electrolyte may be used as the electrolyte.

The non-aqueous electrolyte may include a lithium salt of an electrolyte and an organic solvent, the lithium salt is represented by, for example, Li⁺X⁻, and as an anion (X⁻) of the lithium salt, F⁻, Cl⁻, Br⁻, I⁻, NO₃⁻, N(CN)₂⁻, BF₄⁻, ClO₄⁻, PF₆⁻, (CF₃)₂PF₄⁻, (CF₃)₃PF₃⁻, (CF₃)₄PF₂⁻, (CF₃)₅PF⁻, (CF₃)₆P⁻, CF₃SO₃⁻, CF₃CF₂SO₃⁻, (CF₃SO₂)₂N⁻, (FSO₂)₂N⁻, CF₃CF₂(CF₃)₂CO⁻, (CF₃SO₂)₂CH⁻, (SF₅)₃C⁻, (CF₃SO₂)₃C⁻, CF₃(CF₂)₇SO₃⁻, CF₃CO₂⁻, CH₃CO₂⁻, SCN⁻ and (CF₃CF₂SO₂)₂N⁻, and the like may be exemplified.

As the organic solvent, for example, propylene carbonate (PC), ethylene carbonate (EC), butylene carbonate, diethyl carbonate (DEC), dimethyl carbonate (DMC), ethyl methyl carbonate (EMC), methyl propyl carbonate, ethylpropyl carbonate, dipropyl carbonate, vinylene carbonate, methyl acetate (MA), ethyl acetate (EA), n-propylacetate (n-PA), 1,1-dimethylethyl acetate (DMEA), methyl propionate (MP), ethyl propionate (EP), fluoroethyl acetate (FEA), difluoroethyl acetate (DFEA), trifluoroethyl acetate (TFEA), dibutyl ether, tetraethylene glycol dimethyl ether (TEGDME), diethylene glycol dimethyl ether (DEGDME), dimethoxyethane, tetrahydrofuran (THF), 2-methyltetrahydrofuran, ethyl alcohol, isopropyl alcohol, dimethyl sulfoxide, acetonitrile, diethoxyethane, sulfolane, γ-butyrolactone, propylene sulfite, and the like may be used. These may be used alone or in combination of two or more thereof.

The non-aqueous electrolyte may further include an additive. The additive may include, for example, a cyclic carbonate compound, a fluorine-substituted carbonate compound, a sultone compound, a cyclic sulfate compound, a cyclic sulfite compound, a phosphate compound, a borate compound and the like. These may be used alone or in combination of two or more thereof.

The cyclic carbonate compound may include vinylene carbonate (VC), vinyl ethylene carbonate (VEC), etc.

The fluorine-substituted carbonate compound may include fluoroethylene carbonate (FEC), etc.

The sultone compound may include 1,3-propane sultone, 1,3-propene sultone, 1,4-butane sultone, etc.

The cyclic sulfate compound may include 1,2-ethylene sulfate, 1,2-propylene sulfate, etc.

The cyclic sulfite compound may include ethylene sulfite, butylene sulfite, etc.

The phosphate compound may include lithium difluoro bis(oxalato) phosphate, lithium difluorophosphate, etc.

The borate compound may include lithium bis(oxalate) borate, etc.

In some embodiments, a solid electrolyte may be used in place of the above-described non-aqueous electrolyte. In this case, the lithium secondary battery may be manufactured in the form of an all-solid-state battery. In addition, a solid electrolyte layer may be disposed between the cathode 100 and the anode 130 in place of the above-described separator 140.

The solid electrolyte may include a sulfide-based electrolyte. As a non-limiting example, the sulfide-based electrolyte may include Li₂S-P₂S₅, Li₂S-P₂S₅-LiCl, Li₂S-P₂S₅-LiBr, Li₂S-P₂S₅-LiCl-LiBr, Li₂S-P₂S₅-Li₂O, Li₂S-P₂S₅-Li₂O-LiI, Li₂S-SiS₂, Li₂S-SiS₂-LiI, Li₂S-SiS₂-LiBr, Li₂S-SiS₂-LiCl, Li₂S-SiS₂-B₂S₃-LiI, Li₂S-SiS₂-P₂S₅-LiI, Li₂S-B₂S₃, Li₂S-P₂S₅-ZₘSₙ (m and n are positive numbers, Z is Ge, Zn or Ga), Li₂S-GeS₂, Li₂S-SiS₂-Li₃PO₄, Li₂S-SiS₂-LiₚMO_{q} (p and q are positive numbers, M is P, Si, Ge, B, Al, Ga or In), Li₇-xPS₆-xClₓ (0≤x≤2), Li₇-xPS₆-xBrₓ (0≤x≤2), Li₇-xPS₆-xIₓ (0≤x≤2), etc. These may be used alone or in combination of two or more thereof.

In one embodiment, the solid electrolyte may include an oxide-based amorphous solid electrolyte, such as, for example, Li₂O-B₂O₃-P₂O₅, Li₂O-SiO₂, Li₂O-B₂O₃, Li₂O-B₂O₃-ZnO, etc.

As shown in FIG. 3, electrode tabs (cathode tabs and anode tabs) may protrude from the cathode current collector 105 and the anode current collector 125, respectively, which belong to respective electrode cells, and may extend to one side of the case 160. The electrode tabs may be welded together with the one side of the case 160 to form electrode leads (a cathode lead 107 and an anode lead 127) that extend or are exposed to the outside of the case 160.

The lithium secondary battery may be manufactured, for example, in a cylindrical, prismatic, pouch, or coin type using a can.

Hereinafter, embodiments of the present disclosure will be further described with reference to specific experimental examples. However, the examples and comparative examples included in the experimental examples are provided merely for illustrative purposes of the present disclosure and are not intended to limit the scope of the appended claims. It will be apparent to those skilled in the art that various changes and modifications can be made within the scope and spirit of the present disclosure, and such changes and modifications are to be regarded as falling within the scope of the appended claims.

### Example 1

### Preparation of Anode Active Material

10 g of silicon was dispersed in 250 g of an H₂O solvent, pyrrole was then added thereto such that a molar ratio of pyrrole to silicon was 0.013, and the mixture was stirred at 300 rpm.

A 0.15 M FeCl₃ aqueous solution was added to the mixture of silicon and pyrrole in a reactor, and a polypyrrole polymerization reaction was carried out at 25 °C for 20 hours while stirring the mixture at 300 rpm.

After polymerization was completed, the mixture was washed with H₂O, and vacuum-dried at 100 °C to prepare the anode active material.

### Fabrication of Anode

An anode slurry was obtained by mixing 70 wt% of a mixture of 35 wt% of the anode active material prepared above and 35 wt% of artificial graphite, 14.75 wt% carbon black and 0.25 wt% flaketype carbon nanotubes (CNTs) as conductive materials, and 15 wt% of polyacrylic acid (PAA) as a binder and thickener.

The anode slurry was coated on a copper substrate, and then dried and roll-pressed to fabricate an anode.

### Manufacture of Lithium Half-Cell

A lithium half-cell including the anode and lithium metal as the counter electrode (cathode) was manufactured.

Specifically, a separator (polyethylene, thickness: 20 µm) was interposed between the anode and lithium metal (thickness: 1 mm) to form a lithium coin half-cell.

The assembly of lithium metal/separator/anode was placed in a coin cell plate. After injection of an electrolyte, a cap was placed on the plate and the cell was clamped. A solution, prepared by dissolving 1.0 M LiPF₆ in a mixed solvent of EC/FEC/EMC/DEC (2:1:2:5; volume ratio), was used as the electrolyte. After clamping, the cell was allowed to stand for impregnation for 12 to 24 hours, followed by three charge-discharge cycles at 0.1C (charging conditions: CC-CV 0.1C 0.01 V 0.01C cut-off; discharging conditions: CC 0.1C 1.5 V cut-off).

### Examples 2 to 4 and Comparative Examples 1 to 6

Anode active materials, anodes, and lithium half-cells were prepared in the same manner as in Example 1, except that the molar ratio of pyrrole to silicon was adjusted to the values shown in Table 1.

### (1) Measurement of Carbon and Nitrogen Contents

### 1) Measurement of Carbon Content

The carbon content of the anode active materials prepared according to the examples and comparative examples described above was measured using a carbon/sulfur analyzer (CS844, LECO).

Specifically, a 1 g sample of the anode active material was combusted together with a combustion aid (iron chip, cell II, LECO) at 2600 °C, and the carbon content in the sample was then measured using the IR detector of the C/S analyzer.

The analysis conditions were as follows.
Integration time: min. 45 s, max. 60 s
Furnace power: 100%

### 2) Measurement of Nitrogen Content

The nitrogen content of the anode active materials prepared according to the examples and comparative examples described above was measured using an oxygen/nitrogen/hydrogen analyzer (O/N/H analyzer) (ONH836, LECO).

Specifically, a 1 g sample of the anode active material was dissolved, and the nitrogen content in the sample was measured using the IR detector and the TCD detector of the O/N/H analyzer.

The analysis conditions were as follows.
Integration time: min. 20 s, max. 80 s
Furnace power: 4500 W

### (2) Measurement of XPS Surface Silicon Content

The anode active materials prepared according to the examples and comparative examples were sampled by attaching them to carbon tape and were subjected to XPS analysis (X-ray photoelectron spectroscopy: ESCALAB 250Xi, Thermo Scientific). The percentage (at%) of silicon atoms included in the polypyrrole-containing coating layer relative to the total number of atoms present in the polypyrrole-containing coating layer and a surface oxide layer was measured under the following conditions.

### [XPS Analysis Conditions]

i) X-ray type: Al kα, Source energy: 1486.68 eV, Beam size: 500 µm
ii) Analyzer: CAE (constant analyzer energy) mode
iii) Number of scans: 20
iv) Pass energy: 20 eV
v) Ion gun: Ar ion
vi) Ion energy: 4000 eV
vii) Ion current: High
viii) Raster size: 3 mm
ix) Etch cycle: 10 s
x) Total levels: 11

### (3) Evaluation of Initial Discharge Capacity and Initial Capacity Efficiency

The lithium half-cells manufactured according to the examples and comparative examples were charged (CC-CV 0.1C, 0.01 V, 0.01C cut-off) and discharged (CC 0.1C, 1.5 V cut-off) once each at room temperature (25 °C), and the initial charge capacity and initial discharge capacity were measured.

The initial capacity efficiency was evaluated as a percentage by dividing the initial discharge capacity by the initial charge capacity.

### (4) Evaluation of Capacity Retention (at 50 Cycles)

The lithium half-cells manufactured according to the examples and comparative examples described above were charged (CC-CV 0.1C, 0.01 V, 0.01C cut-off) and discharged (CC 0.1C, 1.5 V cut-off) 50 times each at room temperature (25 °C), and the discharge capacity was measured. A 10 min rest period was provided between charge/discharge cycles. The capacity retention was calculated as a percentage by dividing the measured discharge capacity by the initial discharge capacity measured in (3) above.

The measurement and evaluation results are shown in Table 1 below.

**[TABLE 1]**

| | **py/Si molar ratio** | **C content (%)** | **N content (%)** | **XPS surface silicon content (at%)** | **Initial discharge capacity (mAh/g)** | **Initial capacity efficiency (%)** | **Capacity retention (%, 50 cycles)** |
|---|---|---|---|---|---|---|---|
| Example 1 | 0.013 | 4.6 | 0.7 | 3 | 3431 | 93.4 | 85 |
| Example 2 | 0.025 | 6.2 | 1.2 | 2 | 3290 | 92.9 | 81 |
| Example 3 | 0.052 | 9.1 | 2.2 | 1 | 2338 | 91.9 | 75 |
| Example 4 | 0.1 | 11.8 | 19.1 | 1 | 2138 | 90.3 | 73 |
| Comparative Example 1 | 0 | 0 | 0 | 24 | 2938 | 70.1 | 12 |
| Comparative Example 2 | 0 | 4.7 | 0 | 13 | 3200 | 85.1 | 22 |
| Comparative Example 3 | 0.2 | 15.1 | 3.5 | 1 | 1942 | 69.8 | 62 |
| Comparative Example 4 | 0.3 | 17.3 | 4.7 | 1 | 1713 | 60.1 | 51 |
| Comparative Example 5 | 0.4 | 25.1 | 9.7 | 1 | 1508 | 53.7 | 41 |
| Comparative Example 6 | 0.003 | 1.2 | 0.2 | 13 | 3249 | 92.1 | 50 |

Referring to Table 1, in the examples in which the molar ratio of the pyrrole repeating unit of the polypyrrole to the silicon in the anode active material was 0.01 to 0.15, the initial capacity efficiency and capacity retention were improved overall compared with the comparative examples.

In Comparative Example 1, which did not include the coating layer including polypyrrole, the volume of the silicon-based particles expanded excessively during charging, resulting in lower initial discharge capacity, initial capacity efficiency, and capacity retention compared with Example 1.

In Comparative Example 3, where the py/Si molar ratio exceeded 0.15, the coating layer hindered migration of lithium ions during charging and discharging, resulting in a significantly lower initial capacity efficiency compared with Example 4.

In Comparative Example 6, where the py/Si molar ratio was less than 0.01, the polypyrrole was insufficiently coated, causing cracks to occur in the silicon-based particles during charging and discharging, resulting in a significantly lower capacity retention compared with Example 1.

The contents described above are merely examples of applying the principles of the present disclosure, and other configurations may be further included without departing from the scope of the present disclosure.

The invention relates also to the following numbered aspects:
Aspect 1. An anode active material for a lithium secondary battery comprising:
   silicon-based particles including silicon; and
   a coating layer covering at least a portion of a surface of the silicon-based particles and including polypyrrole;
   wherein a molar ratio of a pyrrole repeating unit of the polypyrrole to the silicon is 0.01 to 0.15
Aspect 2. The anode active material for a lithium secondary battery according to aspect 1, wherein the molar ratio of the pyrrole repeating unit of the polypyrrole to the silicon is 0.01 to 0.07.
Aspect 3. The anode active material for a lithium secondary battery according aspect to 1 or 2, wherein the coating layer including polypyrrole has a thickness of 5 nm to 300 nm.
Aspect 4. The anode active material for a lithium secondary battery according to aspect 1 to 3, wherein the polypyrrole has a weight-average molecular weight of 2,000 to 1,000,000.
Aspect 5. The anode active material for a lithium secondary battery according to aspect 1 to 4, wherein the coating layer further comprises a conductive polymer selected from the group consisting of polyacetylene, polyaniline, polythiophene, and a mixture thereof.
Aspect 6. The anode active material for a lithium secondary battery according to aspect 1 to 5, wherein the content of carbon derived from the polypyrrole is 0.5 % by weight to 15 % by weight based on the total weight of the anode active material.
Aspect 7. The anode active material for a lithium secondary battery according to aspect 1 to 6, wherein the content of nitrogen derived from the polypyrrole is less than 5 % by weight based on the total weight of the anode active material.
Aspect 8. The anode active material for a lithium secondary battery according to aspect 1 to 7, wherein the silicon content on a surface of the anode active material, as determined by X-ray photoelectron spectroscopy (XPS) analysis, is less than 10 atomic percent (at%).
Aspect 9. The anode active material for a lithium secondary battery according to aspect 1 to 8, wherein the anode active materials have a median particle diameter (D50) of 1 µm to 15 µm.
Aspect 10. The anode active material for a lithium secondary battery according to aspect 1 to 9, wherein the silicon-based particles comprise an alloy of silicon and at least one metal selected from the group consisting of Al, Sn, Pb, Zn, Bi, In, Mg, Ga, Cd, and a mixture thereof.
Aspect 11. A lithium secondary battery comprising:
   an anode comprising the anode active material for a lithium secondary battery according to aspect 1 to 10; and
   a cathode disposed opposite the anode
Aspect 12. The lithium secondary battery according to aspect 11, wherein the anode further comprises a carbon-based active material.

## Claims

1. An anode active material for a lithium secondary battery comprising:
silicon-based particles including silicon; and
a coating layer covering at least a portion of a surface of the silicon-based particles and including polypyrrole;
wherein a molar ratio of a pyrrole repeating unit of the polypyrrole to the silicon is 0.01 to 0.15.

2. The anode active material for a lithium secondary battery according to claim 1, wherein the molar ratio of the pyrrole repeating unit of the polypyrrole to the silicon is 0.01 to 0.07.

3. The anode active material for a lithium secondary battery according to claim 1 or 2, wherein the coating layer including polypyrrole has a thickness of 5 nm to 300 nm.

4. The anode active material for a lithium secondary battery according to any one of claims 1 to 3, wherein the polypyrrole has a weight-average molecular weight of 2,000 to 1,000,000.

5. The anode active material for a lithium secondary battery according to any one of claims 1 to 4, wherein the coating layer further comprises a conductive polymer selected from the group consisting of polyacetylene, polyaniline, polythiophene, and a mixture thereof.

6. The anode active material for a lithium secondary battery according to any one of claims 1 to 5, wherein the content of carbon derived from the polypyrrole is 0.5 % by weight to 15 % by weight based on the total weight of the anode active material.

7. The anode active material for a lithium secondary battery according to any one of claims 1 to 6, wherein the content of nitrogen derived from the polypyrrole is less than 5 % by weight based on the total weight of the anode active material.

8. The anode active material for a lithium secondary battery according to any one of claims 1 to 7, wherein the silicon content on a surface of the anode active material, as determined by X-ray photoelectron spectroscopy (XPS) analysis, is less than 10 atomic percent (at%).

9. The anode active material for a lithium secondary battery according to any one of claims 1 to 8, wherein the anode active materials have a median particle diameter (D50) of 1 µm to 15 µm.

10. The anode active material for a lithium secondary battery according to any one of claims 1 to 9, wherein the silicon-based particles comprise an alloy of silicon and at least one metal selected from the group consisting of Al, Sn, Pb, Zn, Bi, In, Mg, Ga, Cd, and a mixture thereof.

11. A lithium secondary battery comprising:
an anode comprising the anode active material for a lithium secondary battery according to any one of claims 1 to 10; and
a cathode disposed opposite the anode.

12. The lithium secondary battery according to claim 11, wherein the anode further comprises a carbon-based active material.
